(19) Europäisches Patentamt
European Patent Office
Office européen des brevets

(11) EP 2 469 633 B1

(12) # EUROPEAN PATENT SPECIFICATION

(45) Date of publication and mention of the grant of the patent:
**26.02.2014 Bulletin 2014/09**

(51) Int Cl.:
***H01M 10/42*** *(2006.01)* ***H01M 10/052*** *(2010.01)*
***H01M 10/0567*** *(2010.01)* ***H01M 10/0569*** *(2010.01)*

(21) Application number: **11190839.8**

(22) Date of filing: **25.11.2011**

(54) **A mixed solvent for an electrolyte for a lithium secondary battery and lithium secondary battery comprising the same**

Gemischtes Lösungsmittel für einen Elektrolyten für eine Lithiumsekundärbatterie und Lithiumsekundärbatterie damit

Solvant mixte pour un électrolyte pour une batterie secondaire au lithium et batterie secondaire au lithium le comprenant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2010 US 426367 P**
**22.09.2011 US 201113240881**

(43) Date of publication of application:
**27.06.2012 Bulletin 2012/26**

(73) Proprietor: **Samsung SDI Co., Ltd.**
**Gyeonggi-do (KR)**

(72) Inventors:
- **Lee, Bora**
**Gyeonggi-do (KR)**
- **Lee, Yongbeom**
**Gyeonggi-do (KR)**
- **Park, Sinyoung**
**Gyeonggi-do (KR)**
- **Kim, Sunyoung**
**Gyeonggi-do (KR)**

(74) Representative: **Mounteney, Simon James**
**Marks & Clerk LLP**
**90 Long Acre**
**London**
**WC2E 9RA (GB)**

(56) References cited:
**EP-A1- 2 157 656**
**EP-A1- 2 325 936**
**JP-A- 7 249 432**
**US-A- 5 830 600**
**US-B1- 7 476 468**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

BACKGROUND

1. Field

The present invention relates to a mixed solvent for an electrolyte for a lithium secondary battery capable of improving safety and reliability of the lithium secondary battery and a lithium secondary battery comprising the electrolyte.

2. Description of the Related Art

A mixed solution prepared by dissolving one or more lithium salts selected from $LiPF_6$, $LiBF_4$, LiBOB, LiFOB, LiTFSI, LiBETI and others into a mixed solvent consisting of cyclic esters such as ethylene carbonate (EC), propylene carbonate (PC), butylene carbonate (BC), gamma-butyrolactone (GBL), gamma-valerolactone (GVL) and others, and chain esters such as dimethyl carbonate (DMC), ethylmethyl carbonate (EMC), diethyl carbonate (DEC), dipropyl carbonate (DPC), methyl acetate, ethyl propionate, methyl butyrate, methyl hexanoate and others is used as an electrolyte for a lithium secondary battery. However, these kinds of organic solvents as combustible materials have demerits in that they are liable to cause combustion, and they are vulnerable to safety. In order to solve such demerits, a way of enhancing flame retardancy by additionally mixing flame retarding additives of fluorine-based compounds or phosphorous compounds such as phosphate, phosphazene and others with an existing electrolyte has been examined.

However, it is difficult to practically apply the phosphate-based material to the electrolyte since the inclusion of phosphate-based material deteriorates ion conductivity and is easily subject to reduction at the negative electrode. Therefore, materials such as fluoroalkyl carbonate, fluoroalkyl ester and fluoroalkyl ether has been examined as alternative materials instead of the phosphate-based material.

Fluoroalkyl carbonate and fluoroalkyl ester among the materials are excellent in flame retardancy. However, fluoroalkyl carbonate and fluoroalkyl ester have high side reaction at the negative electrode and weaken interfacial properties. Therefore, it is difficult to use fluoroalkyl carbonate and fluoroalkyl ester in sufficient amounts for applying flame retardancy to the electrolyte. On the contrary, since fluoroalkyl ether has relatively low reductive cleavage at the negative electrode such that it is capable of improving safety of the batteries without greatly deteriorating performance of batteries. However, although the electrolyte should be used in an excessive amount of 50% by volume or more with respect to the total volume of the mixed solvent such that fluoroalkyl ether is used to show flame retardancy, properties of the batteries deteriorate by an increase in the viscosity and a decrease in the ion conductivity in this case. Furthermore, there is a limitation that discharge capability during high rate discharge and capability during the cycle life at normal temperature decrease in that case. EP2325936, citable under Article 54(3) EPC, and US7476468 disclose electrolytes for lithium batteries and batteries comprising said electrolytes.

SUMMARY

An aspect of the present invention provides a flame retarding mixed solvent for an electrolyte for a lithium secondary battery capable of improving safety and reliability even without deteriorating performance of the lithium secondary battery, and a lithium secondary battery comprising the electrolyte.

Another aspect of the present invention provides a mixed solvent for a lithium secondary battery electrolyte comprising at least one non-aqueous organic solvent, a further solvent comprising an ester, a fluoroalkyl ether and a phosphazene, wherein the ester is a compound represented by the following chemical formula 3:

[Chemical Formula 3]

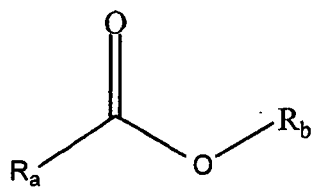

wherein $R_a$ is an aliphatic hydrocarbon group with 1 to 4 carbon atoms, and $R_b$ is an aliphatic hydrocarbon group with 1 to 5 carbon atoms and a ratio of the content of fluoroalkyl ether to the sum of contents of the phosphazene and solvent comprising an ester is a volume ratio of 0.12:1 and 1.75:1.

The fluoroalkyl ether is preferably a compound represented by the following chemical formula 1:

[Chemical Formula 1] $Rf_1$-O-$Rf_2$

wherein $Rf_1$ and $Rf_2$ are independently a fluoroalkyl group having two or more carbon atoms, and the fluoroalkyl group has a fluoridation ratio of 40 to 100%.

The phosphazene is preferably a compound represented by the following chemical formula 2:

[Chemical Formula 2]

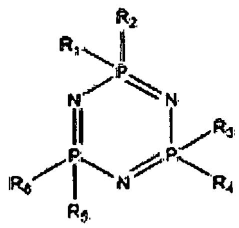

wherein $R_1$ to $R_6$ are independently F or O-$R_7$, wherein $R_7$ is an unsubstituted or substituted alkyl group having 1 to 10 carbon atoms or an unsubstituted or substituted aromatic group having 4 to 10 carbon atoms.

The solvent comprising an ester is a compound represented by the following chemical formula 3:

[Chemical Formula 3]

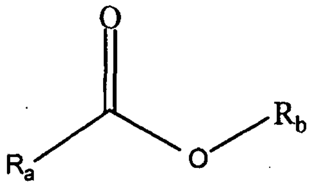

wherein $R_a$ is an aliphatic hydrocarbon group with 1 to 4 carbon atoms, and $R_b$ is an aliphatic hydrocarbon group with 1 to 5 carbon atoms.

The fluoroalkyl ether is preferably included in 8 to 45% by volume with respect to the total volume of the mixed solvent, the phosphazene is preferably included in 2 to 15% by volume, and the solvent comprising an ester is preferably included in 15 to 75% by volume.

A preferred embodiment of the present invention comprises at least one non-aqueous organic solvent, 20% to 70% of a further solvent comprising an ester, 10% to 40% of a fluoroalkylether, and 3 % to 10% of a phosphazene, where all % are of the total volume of the mixed solvent.

The fluoroalkyl ether and the phosphazene are preferably included in 10 to 60% by volume with respect to the total volume of the mixed solvent .

A ratio of the content of fluoroalkyl ether to the sum of contents of the phosphazene and solvent comprising an ester is a volume ratio of 0.12:1 and 1.75:1.

The at least one non-aqueous solvent is preferably a carbonate selected from the group consisting of substituted and unsubstituted dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC) and butylene carbonate (BC) and mixtures thereof.

In another embodiment of the present invention the non-aqueous organic solvent comprises one or more solvents selected from the group consisting of ethylene carbonate (EC), fluoroethylene carbonate (FEC), propylene carbonate (PC), butylene carbonate (BC), γ-butyrolactone (GBL) and γ- valerolactone (GVL) as high dielectric constant/high boiling point solvents.

The non-aqueous organic solvent preferably further comprises one or more linear carbonate solvents selected from the group consisting of dimethyl carbonate (DMC), ethylmethyl carbonate (EMC), diethyl carbonate (DEC) and dipropyl carbonate (DPC), and/or fluorine-based solvents represented by the following chemical formula 4:

[Chemical Formula 4] $Rf_a$-O-C(=O)-O-R

wherein $Rf_a$ is a fluoroalkyl group with 2 to 4 carbon atoms, and R is an alkyl group with 1 to 5 carbon atoms, preferably

$CH_3$ or $C_2H_5$.

The present invention also provides an electrolyte comprising the above-mentioned mixed solvent and at least one lithium salt.

The present invention also provides a lithium secondary battery comprising the above-mentioned electrolyte.

Brief Description of the Figures

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:

FIG. 1 illustrates a partial cross-sectional view of a lithium secondary battery according to an embodiment of the invention;
FIG. 2 illustrates a shape of T-cell in a measuring instrument for measuring ion conductivity of an electrolyte;
FIG. 3 is a graph illustrating normal temperature cycle life-evaluating results of batteries according to Example 4 and Comparative Example 6 of the present invention; and
FIG. 4 is a graph illustrating evaluation results of high-rate discharging properties in batteries according to Examples 1 and 10 and Comparative Examples 6 and 7 of the present invention.

Detailed Description

Hereinafter, a mixed solvent for a lithium secondary battery electrolyte of the present invention, and a lithium secondary battery comprising an electrolyte containing the mixed solvent will be described in more detail with reference to embodiments.

A mixed solvent for a lithium secondary battery electrolyte according to an embodiment of the present invention comprises at least one non-aqueous organic solvent, a further solvent comprising an ester, a fluoroalkyl ether and a phosphazene.

The fluoroalkyl ether is preferably a compound represented by the following chemical formula 1:

[Chemical Formula 1] $Rf_1\text{-}O\text{-}Rf_2$

wherein $Rf_1$ and $Rf_2$ are independently a fluoroalkyl group having two or more carbon atoms, and the fluoroalkyl group has a fluoridation ratio of 40% to 100%, more preferably 50% to 100%, more preferably 55% to 80%.

In the above formula, the fluoroalkyl group represented by $Rf_1$ and $Rf_2$ is preferably an alkyl group having 2 or more carbon atoms, preferably 2 to 10 carbon atoms, more preferably 2 to 6 carbon atoms.

In the above formula, the fluorination ratio means a ratio in which substituent hydrogen atoms in an alkyl group are substituted with fluorine. For instance, in the case of $CF_2HCF_2CH_2$-group, the fluorination ratio is about 57% since four hydrogen atoms among seven hydrogen atoms of propyl group were substituted with fluorine.

Fluoroalkyl ether is preferably included by volume of the mixed solvent between 8% and 45%, more preferably between 10% and 40%, more preferably between 15% and 35%. By including the fluoroalkyl ether in the above preferred ranges the safety of batteries (i.e. flame retardancy is sufficient) and the life performance of batteries (i.e. viscosity is at a level to allow mobility of any lithium ions) are optimised.

The phosphazene is preferably a compound represented by the following chemical formula 2:

[Chemical Formula 2]

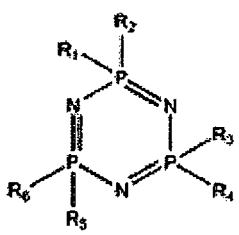

wherein $R_1$ to $R_6$ are independently F or O-$R_7$, wherein $R_7$ is an unsubstituted or substituted alkyl group having 1 to 10

carbon atoms or an unsubstituted or substituted aromatic group having 4 to 20 carbon atoms, preferably the alky or aromatic groups are substituted with at least one halogen, e.g. fluorine, chlorine, iodine or bromine, preferably fluorine, preferably $R_7$ is a fluoroalkyl.

In the above formula, an alkyl group of the alkyl or fluoroalkyl group represented by $R_7$ has one or more carbon atoms, preferably 1 to 10 carbon atoms, more preferably 1 to 6 carbon atoms. The aromatic group presented by $R_7$ preferably has 4 to 10 carbon atoms, preferably it is a phenyl, a naphthyl or a biphenyl group, which is substituted or unsubstituted with an alkyl or fluoroalkyl group with 1 to 6 carbon atoms or a halogen, e.g. fluorine, chlorine, iodine or bromine, preferably fluorine.

The phosphazene is preferably included between 2% and 15%, more preferably between 3% and 10%, more preferably between 5% and 8% by volume of the mixed solvent. By adding the phosphazene in the above range, it is possible to reduce the total content of fluoroalkyl ether so as to minimize any viscosity increase in the electrolyte. By adding the phosphazene in the above preferred ranges the improvements in the safety of batteries (i.e. improvements in flame retardancy) and the life performance of the batteries are optimised.

Flame retarding materials of the fluoroalkyl ether and phosphazene-based compound are preferably included between 10% and 60%, more preferably between 13% and 55%, more preferably between 20% and 50% by volume with respect to the total volume of the mixed solvent. It is possible to obtain optimised effects of improved safety and cycle life characteristics of batteries at the same time by adding the flame retarding materials in the foregoing range.

The solvent comprising an ester consists of an ester represented by the following chemical formula 3:

[Chemical Formula 3]

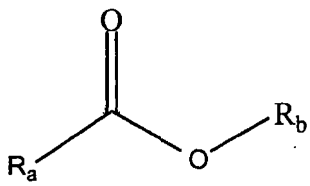

wherein $R_a$ is an aliphatic hydrocarbon group preferably with 1 to 4 carbon atoms, and $R_b$ is an aliphatic hydrocarbon group preferably with 1 to 5 carbon atoms.

In the above formula, the aliphatic hydrocarbon group represented by $R_a$ and $R_b$ is preferably an alkyl, an alkenyl or an alkynyl group.

Examples of the solvent comprising an ester are methyl acetate, ethyl acetate, propyl acetate, butyl acetate, methyl propionate, ethyl propionate, propyl propionate, methyl butyrate, methyl valerate, and others.

The solvent comprising an ester is added to improve ion conductivity. The solvent comprising an ester has a merit that it is capable of improving ion conductivity of the electrolyte more than a linear carbonate solvent. The solvent comprising an ester is preferably included between 15% and 75%, more preferably between 20% and 70%, more preferably between 25% and 65%, more preferably between 30% and 60% by volume with respect to the volume of the mixed solvent. The solvent comprising an ester is capable of lowering viscosity of the electrolyte and improving ion conductivity, by adding the solvent comprising an ester in the foregoing preferred ranges these properties are optimised.

A ratio of content of fluoroalkyl ether to the sum of contents of the phosphazene compound and solvent comprising an ester is a volume ratio of between 0.12:1 and 1.75:1, preferably between 0.15:1 and 1.5:1, more preferably between 0.3:1 and 1.4:1. Content ratios of fluoroalkyl ether, phosphazene, and solvent comprising an ester in the mixed solvent satisfy the foregoing condition to provide an optimised electrolyte having low viscosity and high ion conductivity while maintaining flame retardancy.

Examples of the non-aqueous organic solvent comprise solvents selected from the group consisting of carbonate-based solvent, lactone-based solvent, ether-based solvent and ketone-based solvent, or solvent mixtures thereof.

The at least one non-aqueous organic solvent is preferably included between 5% and 45%, more preferably between 10% and 40%, more preferably between 15% and 35%, more preferably between 20% and 30% by volume with respect to the volume of the mixed solvent.

Examples of the carbonate-based solvent are dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylenes carbonate (BC), and others.

In preferred embodiments of the present invention the at least one non-aqueous organic solvent is preferably a carbonate substituted by at least one substituent selected from the group consisting of nitro-groups, cyano-groups or a halogen, preferably at least one halogen (e.g. fluorine, chlorine, iodine or bromine, preferably fluorine or chlorine), preferably the substituted carbonate is an ethylene carbonate. Examples of preferred ethylene carbonates may comprise

difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and others.

Examples of the lactone-based solvent are γ-butyrolactone, γ-valerolactone, decanolide, mevalonolactone, caprolactone, and others.

Examples of the ether-based solvent are dibutyl ether, tetraglyme, diglyme, dimethoxyethane, 2-methyl tetrahydrofuran, tetrahydrofuran, and others.

Examples of the ketone-based solvent are comprise cyclohexanone, poly(methyl vinyl ketone), and others.

The above non-aqueous organic solvents are preferably used independently or in a mixture formed of one or more thereof. A mixing ratio of the non-aqueous organic solvents is preferably properly adjusted according to target performance of the batteries.

In another embodiment of the present invention the non-aqueous organic solvent preferably comprises one or more solvents selected from the group consisting of ethylene carbonate (EC), fluoroethylene carbonate (FEC), propylene carbonate (PC), butylene carbonate (BC), γ-butyrolactone (GBL), and γ-valerolactone (GVL). These are solvents with a high dielectric constant/high boiling point.

If the non-aqueous organic solvent comprises an ethylene carbonate, the ethylene carbonate is preferably included in 5% to 35%, preferably 15% to 30% by volume with respect to volume of the mixed solvent. In this range conduction of ions is most smoothly performed since ion dissociation degree in the electrolyte and viscosity of the electrolyte are optimised.

Furthermore, the non-aqueous organic solvent preferably further comprises one or more linear carbonate solvents selected from the group consisting of dimethyl carbonate (DMC), ethylmethyl carbonate (EMC), diethyl carbonate (DEC) and dipropyl carbonate (DPC), and/or a fluorine-based solvent represented by the following chemical formula 4:

[Chemical Formula 4] $Rf_a$-O-C(=O)-O-R

wherein $Rf_a$ is a fluoroalkyl group with 2 to 4 carbon atoms, and R is an alkyl group with 1 to 5 carbon atoms, preferably $CH_3$ or $C_2H_5$.

The linear carbonate solvent and fluorine-based solvent represented by the foregoing chemical formula 4 is preferably added to increase flame retardancy of the electrolyte, and they preferably are included in 0.5% to 15%, more preferably 1% to 10% by volume with respect to volume of the mixed solvent.

A preferred embodiment of the present invention provides a mixed solvent for a lithium secondary battery electrolyte comprising:

at least one non-aqueous organic solvent in an amount by volume of the mixed solvent between 5% and 45% , more preferably between 10% and 40%;
a further solvent comprising an ester in an amount by volume of the mixed solvent between 15% and 75%, more preferably between 20% and 70%;
a fluoroalkyl ether in an amount by volume of the mixed solvent between 8% and 45%, more preferably between 10% and 40%; and
a phosphazene in an amount by volume of the mixed solvent between 2% and 15%, more preferably between 3% and 10%. The individual components are as described above and may be present in any combination of the preferred ranges discussed above.

The lithium salt acts as a supply source of lithium ions in batteries to allow for basic operation of lithium secondary batteries, and plays a role in promoting the movement of lithium ions between positive and negative electrodes. The lithium salt is one or more salts selected from the group consisting of $LiPF_6$, $LiBF_4$, LiFOB (lithium difluoro(oxalato) borate), LiBOB (lithium bis(oxalato)borate), $LiN(SO_2CF_3)_2$, $LiN(SO_2C_2F_5)_2$, LiFSI (Li bis(fluorosulphonyl)imide), and LiN $(SO_2C_2F_4SO_2)$ and mixtures thereof. The lithium salt is preferably $LiPF_6$ alone, or a salt mixture of $LiPF_6$ and one or more salts selected from the group consisting of $LiBF_4$, LiFOB, LiBOB, $LiN(SO_2CF_3)_2$, $LiN(SO_2C_2F_5)_2$, LiFSI, and LiN $(SO_2C_2F_4SO_2)$. The lithium salt is preferably a lithium salt which has low lattice energy and high dissociation degree such that the lithium salt is excellent in ion conductivity and has good thermal stability and oxidation resistance.

It is preferable to use the lithium salt within a concentration range of 0.5 to 1.5 M, more preferably between 0.75 and 1.25 M. In the above preferred ranges the conductivity and mobility of the lithium ions are optimised.

Furthermore, an electrolyte for a lithium secondary battery of the present invention preferably further comprises one or more compounds selected from the group consisting of vinylene carbonate (VC), vinyl ethylene carbonate (VEC), succinic acid nitrile (SN), succinic anhydride (SA), and propene sulfone in addition to the above-described embodiments. The compounds are preferably added as cycle life-improving additives for improving cycle lives of batteries, and amounts of the compounds used can be appropriately adjusted.

The present invention also encompasses a process for preparing the above mixed solvents comprising the

step of combining at least one non-aqueous organic solvent, a further solvent comprising an ester, a fluoroalkylether and a phosphazene. Preferably, the process also comprises mixing a lithium salt with the obtained mixed solvent. The present invention also encompasses processes where any of the above-mentioned additional components (e.g. one or more linear carbonate solvents or fluorine-based solvent etc) are mixed with the mixed solvent. In a preferred embodiment of the present invention the components of the mixed solvent are mixed in the above-mentioned preferred ranges.

Hereinafter, a lithium secondary battery comprising an electrolyte for a lithium secondary battery according to embodiments of the present invention will be described.

FIG. 1 illustrates a partial cross-sectional view of a lithium secondary battery according to embodiments of the present invention.

Referring to FIG. 1, a lithium secondary battery according to embodiments of the present invention preferably includes a can 10, an electrode assembly 12, a cap assembly 20, and an electrolyte. In the lithium secondary battery, the electrode assembly 12 and electrolyte are preferably housed in the can 10, and the cap assembly 20 is formed by sealing a top part of the can.

The electrode assembly 12 preferably includes a positive electrode plate 13, a negative electrode plate 15, and a separator 14. The electrode assembly 12 is preferably formed by coiling the laminated layers after sequentially laminating the positive electrode plate 13, separator 14, and negative electrode plate 15.

The positive electrode plate 13 is preferably formed by applying positive electrode active materials on the surface of a positive electrode collector. Aluminum, aluminum alloys, and others can be used as the positive electrode collector. The positive electrode collector is preferably formed in the form of a foil or mesh. The mixture is applied on the surface of the positive electrode collector after preparing a mixture in a slurry state by dispersing the positive electrode active material into solvent along with a binder and conductive material, and thickening agent if necessary.

The positive electrode active material is formed of material into which lithium ions can be reversibly interposed, and from which the lithium ions can be reversibly separated. Examples of the positive electrode active material are composite metal oxides of lithium and at least one selected from cobalt, manganese, and nickel. The positive electrode active material preferably additionally includes elements selected from the group consisting of Mg, Al, Co, K, Na, Ca, Si, Ti, Sn, V, Ge, Ga, B, As, Zr, Mn, Cr, Fe, Sr, V, and rare earth elements.

The negative electrode plate 15 is formed by applying negative electrode active material on to the surface of a negative electrode collector. Copper, copper alloys and others are preferably used as the negative electrode collector. The negative electrode collector is preferably formed in the form of a foil or mesh. The mixture is applied on the surface of the negative electrode collector after preparing a mixture in a slurry state by dispersing the negative electrode active material into solvent along with a binder and conductive material, and thickening agent if necessary.

The negative electrode active material is formed of material into which lithium ions can be interposed, and from which the lithium ions can be separated. Examples of the negative electrode active material include carbon-based negative electrode active material (thermally decomposed carbon, coke or graphite) of crystalline or amorphous carbon, or carbon composite, burnt organic polymer compound, carbon fiber, tin oxide compound, lithium metal, or alloys of lithium and other elements. Examples of the amorphous carbon include hard carbon, coke, mesocarbon microbeads (MCMB) baked at 1500 °C or less, mesophase pitch-based carbon fiber (MPCF), and others. The crystalline carbon preferably includes graphite-based materials, specifically including natural graphite, graphitized coke, graphitized MCMB, graphitized MPCF, and others.

The separator 14 is located between the positive electrode plate 13 and negative electrode plate 15 to prevent a short circuit of the positive electrode plate 13 and negative electrode plate 15. Examples of the separator 14 are include well-known materials such as polymer membranes of polyolefin, polypropylene and polyethylene or multilayer films thereof, microporous films, woven fabrics, and nonwoven fabrics.

The cap assembly 20 preferably includes a cap plate 40, an insulation plate 50, a terminal plate 60, and an electrode terminal 30. The cap assembly 20 is assembled with an insulation case 70 to seal the can 10.

The electrode terminal 30 is inserted into a terminal through-hole 41 formed in the center of the cap plate 40. The electrode terminal 30 is inserted into the terminal through-hole 41 together with the tube type gasket in a state that a tube type gasket 46 is coupled to the outer face of the electrode terminal 30 when inserting the electrode terminal 30 into the terminal through-hole 41. Therefore, the electrode terminal 30 is electrically insulated with the cap plate 40.

The electrolyte is injected into the can 10 through an electrolyte injection hole 42 after the cap assembly 20 is assembled onto the top part of the can 10. The electrolyte injection hole 42 is sealed by a separate stopper 43. The electrode terminal 30 is connected to a negative electrode tab 17 of the negative electrode plate 15 or a positive electrode tab 16 of the positive electrode plate 13 such that the electrode terminal 30 is operated as a negative terminal or a positive terminal.

On the other hand, the lithium secondary battery can be formed in a unit cell constructed in a structure of positive electrode plate/separator/negative electrode plate, a bi-cell constructed in a structure of positive electrode plate/separator/negative electrode plate/separator/positive electrode plate, or a layer-built cell constructed in such a structure that unit cells are repeated.

Further, a lithium secondary battery of the present invention can be formed in a cylinder type, a pouch type, or other shape besides the illustrated prismatic type.

Hereinafter, the present invention will be described in more detail with reference to the following Embodiments and Comparative Examples. However, the following Embodiments and Comparative Examples are provided for illustrative purposes only, and the scope of the present invention should not be limited thereto in any manner.

[Example 1]

A positive electrode active material slurry was prepared by dispersing $LiCoO_2$ as positive electrode active material, polyvinylidene fluoride (PVdF) as binder, and carbon as conductive material into N-methyl-2-pyrrolidone solvent in a weight ratio of 92:4:4. A positive electrode plate was manufactured by coating the positive electrode active material slurry on an aluminum foil with a thickness of 15 $\mu$m, drying the positive electrode active material slurry coated on the aluminum foil, and rolling the dried positive electrode active material slurry coated on the aluminum foil. A negative electrode active material slurry was prepared by dispersing the mixture into water after mixing graphite as negative electrode active material, styrene-butadiene rubber (SBR) as binder, and carboxymethyl cellulose (CMC) as thickening agent in a weight ratio of 96:2:2. A negative electrode plate was manufactured by coating the negative electrode active material slurry on a copper foil with a thickness of 10 $\mu$m, drying the negative electrode active material slurry coated on the copper foil, and rolling the dried negative electrode active material slurry coated on the copper foil.

The coiled layers were inserted into a rectangular can having dimensions of 46 mmx34 mmx50 mm after inserting a polyethylene (PE) separator with a thickness of 18 $\mu$m between the electrode plates and coiling the respective layers. An electrolyte was injected into the can to manufacture a lithium secondary battery.

The electrolyte was prepared by mixing 1.0 M of $LiPF_6$ with a solvent mixture of ethylene carbonate (EC), fluoroethylene carbonate (FEC), fluoroalkyl ether (FE), phosphazene (Pz), and solvent comprising an ester. Fluoroalkyl ether was a compound of $CF_2H\text{-}CF_2\text{-}CH_2\text{-}O\text{-}CF_2\text{-}CF_2H$, the phosphazene was a compound of the chemical formula 2 ($R_1$-$R_5$=F and $R_6$=$OCH_2CH_3$), and the solvent comprising an ester was ethyl propionate ($C_2H_5\text{-}C(=O)O\text{-}C_2H_5$).

A composition for the solvent mixture is as shown in the following table 1.

[Examples 2 to 17]

Lithium secondary batteries were manufactured in Examples 2 to 17 in the same method as in Example 1 except that compositions for solvent mixtures of electrolytes in Examples 2 to 17 were prepared as shown in the following Table 1.

[Table 1]

| | Solvent mixture (% by volume) | | | | | | |
|---|---|---|---|---|---|---|---|
| | EC | FEC | FE | Pz | EMC | FC | Solvent comprising an ester |
| Example 1 | 20 | 5 | 10 | 3 | - | - | Ester1 62 |
| Example 2 | 20 | 5 | 10 | 3 | - | - | Ester2 62 |
| Example 3 | 20 | 5 | 10 | 3 | - | - | Ester3 62 |
| Example 4 | 20 | 5 | 20 | 5 | - | - | Ester1 50 |
| Example 5 | 20 | 5 | 20 | 5 | - | - | Ester2 50 |
| Example 6 | 20 | 5 | 20 | 5 | - | - | Ester3 50 |
| Example 7 | 20 | 5 | 20 | 5 | - | - | Ester4 50 |
| Example 8 | 20 | 5 | 20 | 5 | - | - | Ester5 50 |
| Example 9 | 20 | 5 | 20 | 5 | - | - | Ester6 50 |
| Example 10 | 20 | 5 | 40 | 10 | - | - | Ester1 25 |
| Example 11 | 20 | 5 | 40 | 10 | - | - | Ester2 25 |
| Example 12 | 20 | 5 | 40 | 10 | - | - | Ester3 25 |
| Example 13 | 20 | 5 | 40 | 10 | 5 | - | Ester1 20 |

(continued)

| | Solvent mixture (% by volume) | | | | | | |
|---|---|---|---|---|---|---|---|
| | EC | FEC | FE | Pz | EMC | FC | Solvent comprising an ester |
| Example 14 | 20 | 5 | 40 | 10 | 5 | - | Ester2 20 |
| Example 15 | 20 | 5 | 40 | 10 | 5 | - | Ester3 20 |
| Example 16 | 20 | 5 | 40 | 10 | - | 5 | Ester1 20 |
| Example 17 | 20 | 5 | 40 | 10 | 2 | 3 | Ester1 20 |

In the above table,
EC: ethylene carbonate
FEC: fluoroethylene carbonate
FE: fluoroalkyl ether ($CF_2H-CF_2-CH_2-O-CF_2-CF_2H$)
Pz: phosphazene (compound of the chemical formula 2, wherein $R_1$-$R_5$=F, and $R_6$=$OCH_2CH_3$)
EMC: ethylmethyl carbonate
FC: fluoroethylmethyl carbonate ($CF_2H-CF_2-OC(=O)O-CH_3$)
Ester1: ethyl propionate ($C_2H_5-C(=O)O-C_2H_5$)
Ester2: propyl acetate ($CH_3-C(=O)O-C_3H_7$)
Ester3: methyl butyrate ($C_3H_7-C(=O)O-CH_3$)
Ester4: propyl propionate ($C_2H_5-C(=O)O-C_3H_7$)
Ester5: butyl acetate ($CH_3-C(=O)O-C_4H_9$)
Ester6: methyl valerate ($C_4H_9-C(=O)O-CH_3$)

[Comparative Examples 1 to 12]

Lithium secondary batteries were manufactured in Comparative Examples 1 to 7 in the same method as in Example 1 except that compositions for solvent mixtures of electrolytes in Comparative Examples 1 to 7 were prepared as shown in the following Table 2.

[Table 2]

| | Solvent mixture (% by volume) | | | | | |
|---|---|---|---|---|---|---|
| | EC | FEC | FE | Pz | EMC | Solvent comprising an ester |
| Comparative Example 1 | 20 | 5 | 5 | - | 70 | - |
| Comparative Example 2 | 20 | 5 | 50 | - | 25 | - |
| Comparative Example 3 | 20 | 5 | - | 2 | 73 | - |
| Comparative Example 4 | 20 | 5 | - | 15 | 60 | - |
| Comparative Example 5 | 20 | 5 | 5 | 2 | 68 | - |
| Comparative Example 6 | 20 | 5 | 20 | 5 | 50 | - |
| Comparative Example 7 | 20 | 5 | 40 | 10 | 25 | - |

Compounds represented by respective constituents in the Table 2 are the same as those in the table 1.
Hereinafter, described are experimental evaluations on electrolytes prepared by the examples and comparative examples and lithium secondary batteries comprising the electrolyte.
Viscosities and ion conductivities of the electrolytes were measured in methods as described below.

<Experimental Example 1: Viscosity>

Viscosities of electrolytes prepared in Examples 1 to 17 and Comparative Examples 1 to 7 were measured by a cone-plate type LVDV-II + Pro Viscometer manufactured by Brookfield Engineering Laboratories, Inc. in a dry room in which ambient temperature was constantly maintained to 20°C. S40 spindles were used as measuring spindles,

rotation velocity was maintained to 10 revolutions per minute, and specimen loading was set to 1 mL. Viscosity values in cP (mPa·s) were measured in 30 seconds after rotating the shaft in a state that specimens were put into a specimen pan. The calculated values were shown in the following tables 3 and 4 after measuring viscosity values of the same specimen twice in the same conditions and calculating average values of the measured viscosity values.

<Experimental Example 2: Ion conductivity>

Ion conductivities of the electrolytes prepared in Examples 1 to 17 and Comparative Examples 1 to 7 were measured by an impedance analysis system manufactured by Lloyd Instruments Ltd trading as Solartron Instruments Ltd in a dry room in which ambient temperature was constantly maintained to 20°C. R (Ohm) values were obtained by measuring AC impedances after injecting 1.5 ml of specimen into a T-cell as illustrated in FIG. 2. Frequencies of the AC impedances were adjusted to a range of 100 Hz to 1 KHz, and AC amplitude values were set to 5 mV. The σ values were represented in the following Tables 3 and 4 after obtaining values (mS/cm) by using the measured R (Ohm) values in the following Expression 1.

[Expression 1]

$$\text{Ion conductivity (S/cm): } \sigma = K/R(\Omega)$$

(where $K=1/S=1/0.25\cdot\pi\cdot D^2=1.9/0.25\cdot 3.14\cdot 0.7^2=4.94\ cm^{-1}$, wherein 1 (cm) is 1.9 cm as a distance between electrodes, D (cm) is 0.7 cm as diameter of an SS electrode, and S ($cm^2$) means cross-sectional view of the electrolyte.)

Further, evaluations on penetration safety, normal temperature cycle life, and high-rate discharging properties of lithium secondary batteries manufactured by the examples and comparative examples were performed by relevant methods as described below.

<Experimental Example 3: Evaluation of penetration safety>

Lithium secondary batteries manufactured in Examples 1 to 17 and Comparative Examples 1 to 7 were charged under 0.5C/4.35V_3hr cutoff conditions. After penetrating a penetration pin with a dimension of 2.5 φ into the charged batteries, the batteries were marked as OK if there was no ignition in the batteries while the batteries were marked as NG if there was ignition in the batteries. The marks OK and NG were represented in the following Tables 3 and 4.

<Experimental Example 4: Evaluation of normal temperature cycle life>

The charged batteries were discharged at 25°C for 10 minutes under 1C/3. 1V cutoff conditions after charging the lithium secondary batteries manufactured in Examples 1 to 17 and Comparative Examples 1 to 7 at 25°C for 10 minutes under 1C/4.2V_0.05CmA cutoff conditions. After performing the charging/discharging process 300 times and calculating capacity retention ratio values (discharge capacities/initial capacities, %), the marks OK and NG were represented in the following Tables 3 and 4 by marking the values as OK if the values are not less than 85% and marking the values as NG if the values are less than 85%.

Further, the charging/discharging process of lithium secondary batteries manufactured in Examples 4 and 6 was performed up to 300 times under the same conditions as the foregoing conditions, and capacity retention ratio values (discharge capacities/initial capacities, %) were calculated and illustrated in FIG. 3.

<Experimental Example 5: Evaluation of high-rate discharging properties>

Lithium secondary batteries manufactured in Examples 4 and 10 and Comparative Examples 6 and 7 were charged at 25°C for 10 minutes under 0.5C/4.2V_0.05CmA cutoff conditions, and the charged batteries were discharged at 25°C for 10 minutes under 0.2C/3.2V, 0.5 C/3.2V, 0.8C/3.2V, 1C/3.2V, 2 C/3.2V, and 3C/3.2V cutoff conditions. Relative discharge capacities per discharge conditions (discharge capacities per respective conditions/0.2 C discharge capacity, %) were calculated and illustrated in FIG. 4.

[Table 3]

| | Viscosity (cP) | Ion conductivity σ(mS/cm) | Penetration safety | Cycle life |
|---|---|---|---|---|
| Example 1 | 4.01 | 9.15 | OK | OK |
| Example 2 | 4.35 | 8.19 | OK | OK |
| Example 3 | 4.66 | 8.02 | OK | OK |
| Example 4 | 4.12 | 8.79 | OK | OK |
| Example 5 | 4.42 | 8.65 | OK | OK |
| Example 6 | 4.73 | 8.51 | OK | OK |
| Example 7 | 4.81 | 8.49 | OK | OK |
| Example 8 | 4.79 | 8.42 | OK | OK |
| Example 9 | 4.71 | 8.36 | OK | OK |
| Example 10 | 4.55 | 8.59 | OK | OK |
| Example 11 | 4.89 | 8.22 | OK | OK |
| Example 12 | 4.92 | 8.20 | OK | OK |
| Example 13 | 4.85 | 8.12 | OK | OK |
| Example 14 | 4.97 | 8.04 | OK | OK |
| Example 15 | 5.01 | 8.00 | OK | OK |
| Example 16 | 4.88 | 8.09 | OK | OK |
| Example 17 | 4.86 | 8.11 | OK | OK |

[Table 4]

| | Viscosity (cP) | Ion conductivity σ(mS/cm) | Penetration safety | Cycle life |
|---|---|---|---|---|
| Comparative Example 1 | 6.92 | 7.06 | NG | OK |
| Comparative Example 2 | 8.31 | 5.02 | OK | NG |
| Comparative Example 3 | 6.88 | 7.01 | NG | OK |
| Comparative Example 4 | 6.67 | 6.98 | OK | NG |
| Comparative Example 5 | 6.72 | 7.00 | NG | OK |
| Comparative Example 6 | 7.01 | 6.80 | OK | NG |
| Comparative Example 7 | 8.97 | 6.25 | OK | NG |

Examples 1 to 12 represent a mixed solvent comprising a fluoroalkyl ether, phosphazene, and solvent comprising an ester of which contents had been respectively adjusted within preferred ranges, and respective experimental results are represented in the table 3. As shown in table 3, the experimental results could satisfy safety and reliability levels desired in batteries since viscosities of electrolytes were low while ion conductivities of the electrolytes were high.

Linear carbonate solvent was added in electrolytes of Examples 13 to 17. Although the solvent comprising an ester is put into the mixtures to lower viscosities of the electrolytes and increase ion conductivities of the electrolytes by adding solvent comprising an ester in the mixtures after preparing mixtures by mixing fluoroalkyl ether and phosphazene such that 50% by volume of mixtures of fluoroalkyl ether and phosphazene is contained in the mixed solvents, it is possible to add linear carbonate in the electrolytes so as to additionally satisfy desired performance of the batteries.

Fluoroalkyl ether, phosphazene, and solvent comprising an ester were mixed in Example 4, and fluoroalkyl ether, phosphazene, and linear carbonate instead of the solvent comprising an ester were mixed in the Comparative Example 6. Since the solvent comprising an ester has a higher effect of lowering viscosity of flame retarding material and a higher ion conductivity than a linear carbonate, it can be seen that at least 1C of high-rate discharging properties is improved in the battery in the Example 4 compared to the Comparative Example 6 as illustrated in FIG. 3. Further, it

can be seen that cycle life characteristics of the battery are improved by reducing the decrease in the initial capacity of the battery and maintaining about 90% of the capacity at 300 cycles in the Example 4 in case of cycle life characteristics of a normal temperature as illustrated in FIG. 4.

Since an electrolyte for a lithium secondary battery of the present invention has a low viscosity and a high ion conductivity while maintaining flame retardancy, a lithium secondary battery comprising such electrolyte has superior effects of high safety and reliability.

Embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present disclosure as set forth in the following claims.

## Claims

1. A mixed solvent for a lithium secondary battery electrolyte comprising:

   at least one non-aqueous organic solvent,
   a further solvent comprising an ester of formula:

   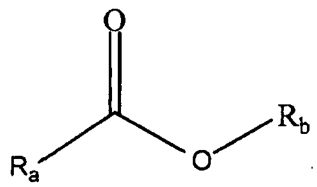

   wherein $R_a$ is an aliphatic hydrocarbon group with 1 to 4 carbon atoms, and $R_b$ is an aliphatic hydrocarbon group with 1 to 5 carbon atoms,
   a fluoroalkyl ether and
   a phosphazene, **characterized in that** the ratio by volume of fluoroalkyl ether to the combined amount of phosphazene and ester is between 0.12:1 and 1.75:1.

2. A mixed solvent according to claim 1, wherein the amount of solvent comprising an ester by volume of the mixed solvent is between 15% and 75%, more preferably between 20% and 70%, more preferably between 25% and 65%, more preferably between 30% and 60%.

3. A mixed solvent according to claim 1 or 2, wherein the amount of fluoroalkyl ether by volume of the mixed solvent is between 8% and 45%, more preferably between 10% and 40%, more preferably between 15% and 35%.

4. A mixed solvent according to any of claims 1 to 3, wherein the amount of phosphazene by volume of the mixed solvent is between 2% and 15%, more preferably between 3% and 10%, more preferably between 5% and 8%.

5. A mixed solvent according to any of claims 1 to 4, wherein the ratio by volume of fluoroalkyl ether to the combined amount of phosphazene and solvent comprising an ester is between 0.15:1 and 1.5:1, more preferably between 0.3:1 and 1.4:1.

6. A mixed solvent according to any of claims 1 to 5, wherein the combined amount of phosphazene and fluoroalkyl ether by volume of the mixed solvent is between 10% and 60%, more preferably between 13% and 55%, more preferably between 20% and 50%.

7. A mixed solvent according to any of claims 1 to 6, wherein the at least one non-aqueous solvent is selected from the group consisting of carbonates, lactones, ethers and ketones and mixtures thereof, preferably carbonates.

8. A mixed solvent according to claim 7, wherein the at least one non-aqueous solvent is a carbonate selected from the group consisting of substituted and unsubstituted dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC) and butylene carbonate (BC) and mixtures thereof, preferably substituted and unsubstituted ethylene carbonate and mixtures thereof.

**9.** A mixed solvent according to claim 7, wherein the at least one non-aqueous solvent is selected from the group consisting of ethylene carbonate (EC), fluoroethylene carbonate (FEC), propylene carbonate (PC), butylene carbonate (BC), γ-butyrolactone (GBL), and γ-valerolactone (GVL) and mixtures thereof.

**10.** A mixed solvent according to any preceding claim, wherein the ester is selected from the group consisting of methyl acetate, ethyl acetate, propyl acetate, butyl acetate, methyl propionate, ethyl propionate, propyl acetate, methyl butyrate, propyl propionate, butyl acetate, and methyl valerate and mixtures thereof.

**11.** A mixed solvent according to any preceding claim, wherein the fluoroalkyl ether is of formula $Rf_1$-O-$Rf_2$, where $Rf_1$ and $Rf_2$ are independently a fluoroalkyl group having two or more carbon atoms, preferably 2 to 6 carbon atoms and the fluoroalkyl group has a fluoridation ratio of 40% to 100%, more preferably 50% to 100%, more preferably 55% to 80%, most preferably the fluoroalkyl ether is $CF_2HCF_2CH_2OCF_2CF_2H$.

**12.** A mixed solvent according to any preceding claim, wherein the phosphazene is of formula:

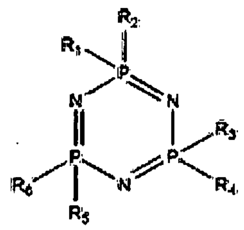

wherein $R_1$ to $R_6$ are independently F or O-$R_7$, wherein $R_7$ is an unsubstituted or substituted alkyl group having 1 to 10 carbon atoms or an unsubstituted or substituted aromatic group having 4 to 10 carbon atoms, preferably the alky or aromatic groups are substituted with at least one halogen, preferably fluorine.

**13.** A mixed solvent according to any preceding claim, further comprising one or more linear carbonate solvents selected from the group consisting of dimethyl carbonate (DMC), ethylmethyl carbonate (EMC), diethyl carbonate (DEC) and dipropyl carbonate (DPC), and/or a fluorine-based solvent represented by the following chemical formula $Rf_a$ O-C (=O)-O-R wherein $Rf_a$ is a fluoroalkyl group with 2 to 4 carbon atoms, and R is an alkyl group with 1 to 5 carbon atoms, preferably $CH_3$ or $C_2H_5$.

**14.** An electrolyte comprising a mixed solvent according to any preceding claim and at least one lithium salt.

**15.** A lithium secondary battery comprising the electrolyte according to claim 14.

## Patentansprüche

**1.** Gemischtes Lösungsmittel für einen Elektrolyten für eine Lithiumsekundärbatterie, umfassend:

mindestens ein nicht-wässeriges organisches Lösungsmittel,
ein weiteres Lösungsmittel, umfassend einen Ester der Formel:

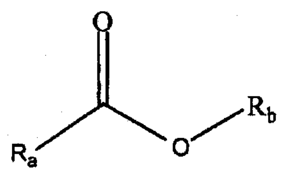

wobei $R_a$ eine aliphatische Kohlenwasserstoffgruppe mit 1 bis 4 Kohlenstoffatomen ist und $R_b$ eine aliphatische

Kohlenwasserstoffgruppe mit 1 bis 5 Kohlenstoffatomen ist,
einen Fluoralkylether und
ein Phosphazen, **dadurch gekennzeichnet, dass** das Volumenverhältnis von Fluoralkylether zu dem vereinigten Anteil von Phosphazen und Ester zwischen 0,12:1 und 1,75:1 ist.

**2.** Gemischtes Lösungsmittel gemäß Anspruch 1, wobei der Volumenanteil von Lösungsmittel, umfassend einen Ester, des gemischten Lösungsmittels zwischen 15% und 75%, stärker bevorzugt zwischen 20% und 70%, stärker bevorzugt zwischen 25% und 65%, stärker bevorzugt zwischen 30% und 60%, ist.

**3.** Gemischtes Lösungsmittel gemäß Anspruch 1 oder 2, wobei der Volumenanteil von Fluoralkylether des gemischten Lösungsmittels zwischen 8% und 45%, stärker bevorzugt zwischen 10% und 40%, stärker bevorzugt zwischen 15% und 35%, ist.

**4.** Gemischtes Lösungsmittel gemäß einem der Ansprüche 1 bis 3, wobei der Volumenanteil von Phosphazen des gemischten Lösungsmittels zwischen 2% und 15%, stärker bevorzugt zwischen 3% und 10%, stärker bevorzugt zwischen 5% und 8%, ist.

**5.** Gemischtes Lösungsmittel gemäß einem der Ansprüche 1 bis 4, wobei das Volumenverhältnis von Fluoralkylether zu dem vereinigten Anteil von Phosphazen und Lösungsmittel, umfassend einen Ester, zwischen 0,15:1 und 1,5: 1, stärker bevorzugt zwischen 0,3:1 und 1,4:1, ist.

**6.** Gemischtes Lösungsmittel gemäß einem der Ansprüche 1 bis 5, wobei der vereinigte Volumenanteil von Phosphazen und Fluoralkylether des gemischten Lösungsmittels zwischen 10% und 60%, stärker bevorzugt zwischen 13% und 55%, stärker bevorzugt zwischen 20% und 50%, ist.

**7.** Gemischtes Lösungsmittel gemäß einem der Ansprüche 1 bis 6, wobei das mindestens eine nicht-wässerige Lösungsmittel aus der Gruppe, bestehend aus Carbonaten, Lactonen, Ethern und Ketonen sowie Gemischen davon, vorzugsweise Carbonaten, ausgewählt ist.

**8.** Gemischtes Lösungsmittel gemäß Anspruch 7, wobei das mindestens eine nicht-wässerige Lösungsmittel ein Carbonat, ausgewählt aus der Gruppe, bestehend aus substituiertem und unsubstituiertem Dimethylcarbonat (DMC), Diethylcarbonat (DEC), Dipropylcarbonat (DPC), Methylpropylcarbonat (MPC), Ethylpropylcarbonat (EPC), Ethylmethylcarbonat (EMC), Ethylencarbonat (EC), Propylencarbonat (PC) und Butylencarbonat (BC) sowie Gemischen davon, vorzugsweise substituiertem und unsubstituiertem Ethylencarbonat sowie Gemischen davon, ist.

**9.** Gemischtes Lösungsmittel gemäß Anspruch 7, wobei das mindestens eine nicht-wässerige Lösungsmittel aus der Gruppe, bestehend aus Ethylencarbonat (EC), Fluorethylencarbonat (FEC), Propylencarbonat (PC), Butylencarbonat (BC), γ-Butyrolacton (GBL) und γ-Valerolacton (GVL) sowie Gemischen davon, ausgewählt ist.

**10.** Gemischtes Lösungsmittel gemäß einem vorhergehenden Anspruch, wobei der Ester aus der Gruppe, bestehend aus Methylacetat, Ethylacetat, Propylacetat, Butylacetat, Methylpropionat, Ethylpropionat, Propylacetat, Methylbutyrat, Propylpropionat, Butylacetat und Methylvalerat sowie Gemischen davon, ausgewählt ist.

**11.** Gemischtes Lösungsmittel gemäß einem vorhergehenden Anspruch, wobei der Fluoralkylether die Formel $Rf_1$-O-$Rf_2$ hat, wo $Rf_1$ und $Rf_2$ unabhängig eine Fluoralkylgruppe mit zwei oder mehreren Kohlenstoffatomen, vorzugsweise 2 bis 6 Kohlenstoffatomen, sind und die Fluoralkylgruppe ein Fluoridierungsverhältnis von 40% bis 100%, stärker bevorzugt 50% bis 100%, stärker bevorzugt 55% bis 80%, hat, am meisten bevorzugt der Fluoralkylether $CF_2HCF_2CH_2OCF_2CF_2H$ ist.

**12.** Gemischtes Lösungsmittel gemäß einem vorhergehenden Anspruch, wobei das Phosphazen die Formel:

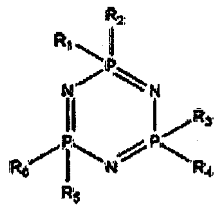

hat,
wobei $R_1$ bis $R_6$ unabhängig F oder O-$R_7$ sind, wobei $R_7$ eine unsubstituierte oder substituierte Alkylgruppe mit 1 bis 10 Kohlenstoffatomen oder eine unsubstituierte oder substituierte aromatische Gruppe mit 4 bis 10 Kohlenstoffatomen ist, vorzugsweise die Alkyl- oder aromatischen Gruppen mit mindestens einem Halogen, vorzugsweise Fluor, substituiert sind.

**13.** Gemischtes Lösungsmittel gemäß einem vorhergehenden Anspruch, weiterhin umfassend ein oder mehrere Lösungsmittel in Form von linearem Carbonat, ausgewählt aus der Gruppe, bestehend aus Dimethylcarbonat (DMC), Ethylmethylcarbonat (EMC), Diethylcarbonat (DEC) und Dipropylcarbonat (DPC), und/oder ein Lösungsmittel auf Fluorbasis, dargestellt durch die folgende chemische Formel $Rf_a$-O-C(=O)-O-R, wobei $Rf_a$ eine Fluoralkylgruppe mit 2 bis 4 Kohlenstoffatomen ist und R eine Alkylgruppe mit 1 bis 5 Kohlenstoffatomen, vorzugsweise $CH_3$ oder $C_2H_5$, ist.

**14.** Elektrolyt, umfassend ein gemischtes Lösungsmittel gemäß einem vorhergehenden Anspruch und mindestens ein Lithiumsalz.

**15.** Lithiumsekundärbatterie, umfassend den Elektrolyten gemäß Anspruch 14.

**Revendications**

**1.** Solvant mixte pour un électrolyte de batterie secondaire au lithium, comprenant:

au moins un solvant organique non aqueux,
un autre solvant comprenant un ester de formule:

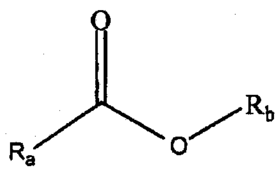

dans laquelle $R_a$ est un groupe hydrocarboné aliphatique ayant 1 à 4 atomes de carbone, et $R_b$ est un groupe hydrocarboné aliphatique ayant 1 à 5 atomes de carbone,
un éther fluoroalkylique et
un phosphazène, **caractérisé en ce que** le rapport en volume de l'éther fluoroalkylique à la quantité combinée de phosphazène et d'ester est entre 0,12:1 et 1,75:1.

**2.** Solvant mixte selon la revendication 1, dans lequel la quantité de solvant comprenant un ester, en volume du solvant mixte, est entre 15% et 75%, de préférence encore entre 20% et 70%, de préférence encore entre 25% et 65%, de préférence encore entre 30% et 60%.

**3.** Solvant mixte selon la revendication 1 ou 2, dans lequel la quantité d'éther fluoroalkylique, en volume du solvant mixte, est entre 8% et 45%, de préférence encore entre 10% et 40%, de préférence encore entre 15% et 35%.

**4.** Solvant mixte selon l'une quelconque des revendications 1 à 3, dans lequel la quantité de phosphazène, en volume du solvant mixte, est entre 2% et 15%, de préférence encore entre 3% et 10%, de préférence encore entre 5% et 8%.

**5.** Solvant mixte selon l'une quelconque des revendications 1 à 4, dans lequel le rapport en volume de l'éther fluoroalkylique à la quantité combinée de phosphazène et de solvant comprenant un ester est entre 0,15:1 et 1,5:1, de préférence encore entre 0,3:1 et 1,4:1.

**6.** Solvant mixte selon l'une quelconque des revendications 1 à 5, dans lequel la quantité combinée de phosphazène et d'éther fluoroalkylique, en volume du solvant mixte, est entre 10% et 60%, de préférence encore entre 13% et 55%, de préférence encore entre 20% et 50%.

**7.** Solvant mixte selon l'une quelconque des revendications 1 à 6, dans lequel ledit au moins un solvant non aqueux est choisi dans le groupe constitué par les carbonates, les lactones, les éthers et les cétones et les mélanges de ceux-ci, de préférence les carbonates.

**8.** Solvant mixte selon la revendication 7, dans lequel ledit au moins un solvant non aqueux est un carbonate choisi dans le groupe constitué par le carbonate de diméthyle (DMC), le carbonate de diéthyle (DEC), le carbonate de dipropyle (DPC), le carbonate de méthylpropyle (MPC), le carbonate d'éthylpropyle (EPC), le carbonate d'éthylméthyle (EMC), le carbonate d'éthylène (EC), le carbonate de propylène (PC) et le carbonate de butylène (BC), substitués et non substitués, et les mélanges de ceux-ci, de préférence un carbonate d'éthylène substitué et non substitué et les mélanges de celui-ci.

**9.** Solvant mixte selon la revendication 7, dans lequel ledit au moins un solvant non aqueux est choisi dans le groupe constitué par le carbonate d'éthylène (EC), le carbonate de fluoroéthylène (FEC), le carbonate de propylène (PC), le carbonate de butylène (BC), la $\gamma$-butyrolactone (GBL) et la $\gamma$-valérolactone (GVL) et les mélanges de ceux-ci.

**10.** Solvant mixte selon l'une quelconque des revendications précédentes, dans lequel l'ester est choisi dans le groupe constitué par l'acétate de méthyle, l'acétate d'éthyle, l'acétate de propyle, l'acétate de butyle, le propionate de méthyle, le propionate d'éthyle, l'acétate de propyle, le butyrate de méthyle, le propionate de propyle, l'acétate de butyle et le valérate de méthyle, et les mélanges de ceux-ci.

**11.** Solvant mixte selon l'une quelconque des revendications précédentes, dans lequel l'éther fluoroalkylique est de formule $Rf_1$-O-$Rf_2$, où $Rf_1$ et $Rf_2$ sont indépendamment un groupe fluoroalkyle ayant deux atomes de carbone ou plus, de préférence 2 à 6 atomes de carbone et le groupe fluoroalkyle a un taux de fluoruration de 40% à 100%, de préférence encore 50% à 100%, de préférence encore 55% à 80%, de toute préférence l'éther fluoroalkylique est $CF_2HCF_2CH_2OCF_2CF_2H$.

**12.** Solvant mixte selon l'une quelconque des revendications précédentes, dans lequel le phosphazène est de formule:

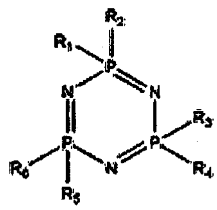

dans laquelle $R_1$ à $R_6$ sont indépendamment F ou O-$R_7$, où $R_7$ est un groupe alkyle non substitué ou substitué ayant 1 à 10 atomes de carbone ou un groupe aromatique non substitué ou substitué ayant 4 à 10 atomes de carbone, préférence les groupes alkyle ou aromatique sont substitués par au moins un halogène, de préférence le fluor.

**13.** Solvant mixte selon l'une quelconque des revendications précédentes, comprenant en outre un ou plusieurs solvants carbonates linéaires choisis dans le groupe constitué par le carbonate de diméthyle (DMC), le carbonate d'éthylméthyle (EMC), le carbonate de diéthyle (DEC) et le carbonate de dipropyle (DPC), et/ou un solvant à base de fluor représenté par la formule chimique suivante $Rf_a$-O-C(=O)-O-R où $Rf_a$ est un groupe fluoroalkyle ayant 2 à 4 atomes de carbone, et R est un groupe alkyle ayant 1 à 5 atomes de carbone, de préférence $CH_3$ ou $C_2H_5$.

**14.** Electrolyte comprenant un solvant mixte selon l'une quelconque des revendications précédentes et au moins un sel de lithium.

**15.** Batterie secondaire au lithium comprenant l'électrolyte selon la revendication 14.

FIG.1

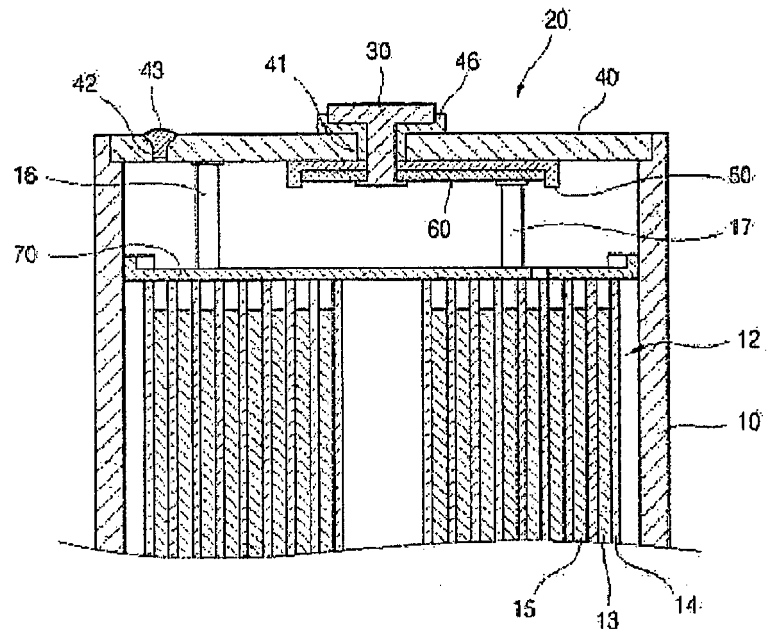
20
30
46
41
43
42
40
16
50
60
17
70
12
10
15
13
14

FIG.2

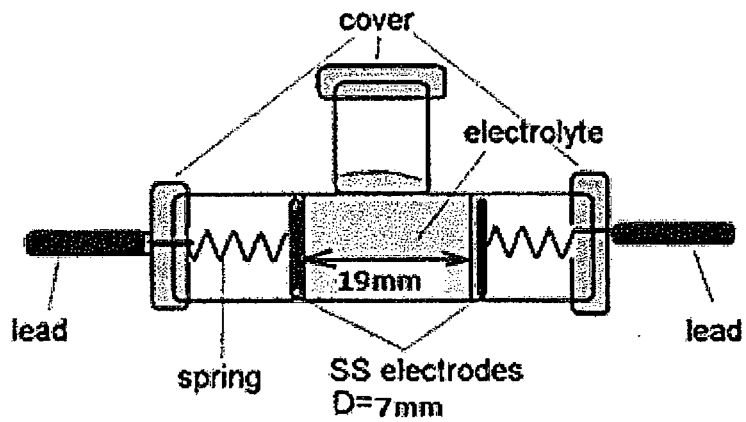
cover
electrolyte
19mm
lead
lead
spring
SS electrodes
D=7mm

FIG.3

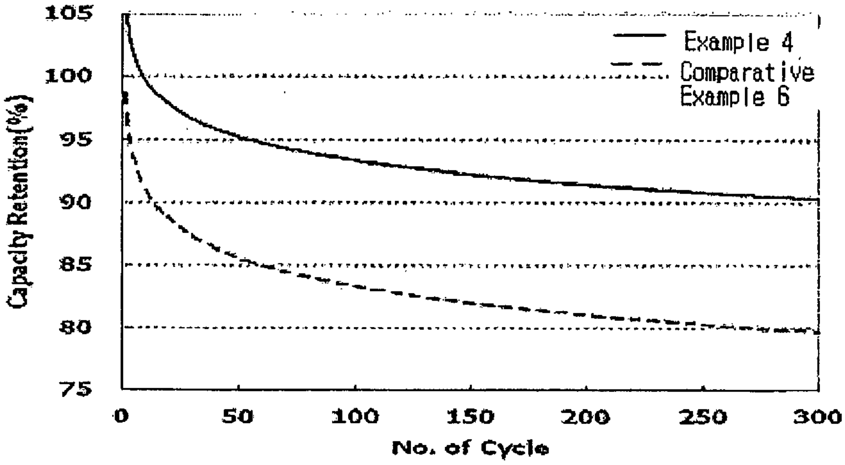
105
100
95
90
85
80
75
Capacity Retention(%)
0
50
100
150
200
250
300
No. of Cycle
Example 4
Comparative Example 6

FIG.4

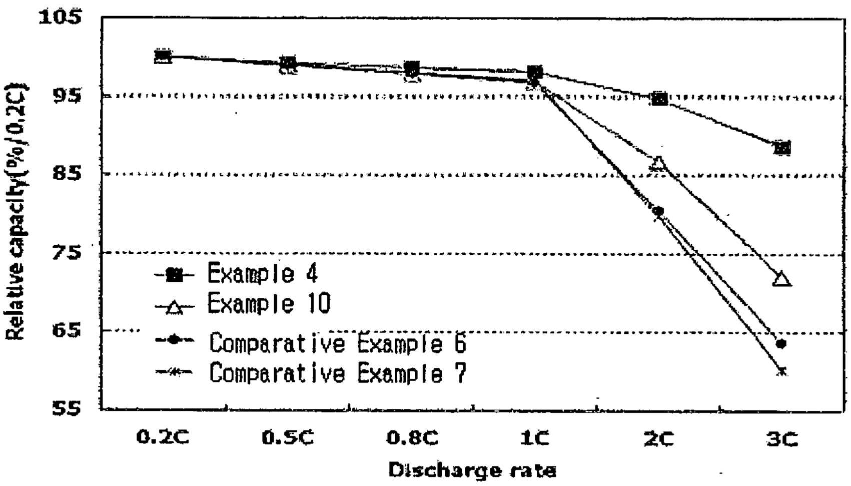
105
95
85
75
65
55
Relative capacity(%/0.2C)
0.2C
0.5C
0.8C
1C
2C
3C
Discharge rate
Example 4
Example 10
Comparative Example 6
Comparative Example 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2325936 A
- US 7476468 B